# EUROPÄISCHE PATENTANMELDUNG

(11) **EP 0 846 515 A1**
(43) Veröffentlichungstag der Anmeldung: **10.06.1998**
(21) Anmeldenummer: 97121445.7
(22) Anmeldetag: 05.12.1997
(51) Int. Cl.: B22F 3/24, H01H 1/02

(54) **Kupfer-Chrom-Kontaktwerkstoff mit feinkörnig umgewandelter Oberfläche für elektrische Schaltkontakte und Verfahren zu dessen Herstellung**

(30) Priorität: 06.12.1996 DE 19650752
(71) Anmelder: Louis Renner GmbH, 85207 Dachau (DE)
(72) Erfinder: Renner, Gerd, 85221 Dachau (DE); Siefken, Udo, Dr., 81541 München (DE)
(74) Vertreter: VOSSIUS & PARTNER

(57) **Zusammenfassung**

Gegenstand der Erfindung ist ein pulvermetallurgisch hergestellter Formkörper aus einem Kupfer-Chrom-Vakuumkontaktwerkstoff mit 20 - 60 Gew.-% Cr, Rest Cu und unvermeidliche Verunreinigungen, der auf mindestens einer Hauptoberfläche ein Raster aus Bereichen mit einer Gefügestruktur aufweist, die feinkörniger als diejenige des pulvermetallurgischen Basiswerkstoffes ist. Die Herstellung des Formkörpers erfolgt durch rasterförmige Einwirkung energiereicher Strahlung auf einen pulvermetallurgisch hergestellten Formkörper. Der Formkörper der Erfindung eignet sich als elektrischer Vakuumschalter.

## Beschreibung

Die Erfindung betrifft pulvermetallurgisch hergestellte Formkörper aus Kupfer-Chrom-Kontaktwerkstoffen, die auf mindestens einer Oberfläche ein geometrisches Muster aus Bereichen mit einer feinkörnig umgewandelten Gefügestruktur aufweisen. Ferner betrifft die Erfindung ein Verfahren zu Ihrer Herstellung und ihre Verwendung als Schaltkontakte in Schaltkammern von elektrischen Vakuumschaltern.

Vakuumkontakte bilden das Herzstück in Schaltkammern bei elektrischen Vakuumschaltern. An die Eigenschaften der Kontaktwerkstoffe werden hohe Anforderungen gestellt wie:
- geringer Materialabbrand
- ausreichendes Schaltvermögen,
- geringe Schweißneigung
- niedriger elektrischer Widerstand,
- gute Durchschlagfestigkeit (Spannungsfestigkeit),
- niedriger Abreißstrom.

Für Vakuum-Leistungsschalter haben sich CuCr-Werkstoffe als besonders brauchbar erwiesen. Sie bieten eine befriedigende Kombination von hoher Schweißsicherheit, hohem Ausschaltvermögen und geringer Kontakterwärmung. Bei diesen Werkstoffen handelt es sich um gasarme metallische Verbunde, die pulvermetallurgisch hergestellt werden, mit Cr-Körnern < 250 µm, insbesondere < 160 µm eingebettet in einer Cu-Matrix.

Bei Untersuchungen zum Einfluß der Korngröße der Cr-Körner auf die Schalteigenschaften des CuCr-Werkstoffes wurde festgestellt, daß feine Cr-Körner sich vorteilhaft auf den Abreißstrom und die Spannungsfestigkeit auswirken; vgl. Rieder et al. "The Influence of Composition and Cr Particle Size of CuCr-Contacts on Chopping Current, Contact Resistance and Breakdown Voltage in Vacuum Interrupters", IEEE Trans, Vol. CHMT-12, (1989), S. 273-283. Folgende Verfahren zur Herstellung feinkörniger Modifikationen des Standardwerkstoffes sind bekannt:

DE 30 50 651 A1 beschreibt eine flächige Erzeugung einer feinkörnigen Oberfläche mittels eines Wärmestroms von 10⁴ - 10⁶ W/cm². Als nachteilig hat sich hierbei erwiesen, daß durch den konzentrierten und flächigen Wärmeeintrag der CuCr-Werkstoff außerordentlich leicht zu Porenbildung neigt. Diese wiederum sind für einen Vakuumwerkstoff in jedem Falle zu vermeiden. Technisch konnte sich daher dieses Verfahren nicht durchsetzen.

EP 115 292 A2 beschreibt das Abschmelzen eines CuCr-Blocks und Abschrecken in einer wassergekühlten Kupferkokille. Das Material erstarrt mit fein verteilt ausgeschiedenen Chromdendriten, frei von Fehlstellen und ohne Lunker. Nachteilig bei dieser Herstellungsart ist der damit verbundene außerordentlich hohe technische Aufwand und somit die sehr hohen Kosten. In der industriellen Praxis wird diese Methode bisher nur punktuell angewandt.

Im Schalterbau behilft man sich zur Zeit weitgehend durch eine Aufbereitung der grobkörnigen CuCr-Kontaktoberfläche mittels einer sogenannten Formierung. Die fertig montierte und evakuierte Schaltkammer wird unter Schaltbedingungen mit einer elektrischen Leistung beaufschlagt. Hierbei entsteht sozusagen in situ eine feinkörnige CuCr-Oberfläche.

Auch dieses Verfahren ist technisch aufwendig, muß beim Schalterbauer durchgeführt werden, verlangt eine spezielle elektromechanische Schalteinrichtung und führt somit zu einer Verteuerung des zu vertreibenden Produktes.

Eine Aufgabe der Erfindung ist es deshalb, Formkörper aus Kupfer-Chrom-Kontaktwerkstoffen bereitzustellen, die eine Gefügestruktur mit feinkörnigen Cr-Körnern ohne Poren, Fehlstellen oder Lunker aufweisen und somit die vorstehend erwähnten, an elektrische Vakuumschalter gestellten hohen Anforderungen erfüllen können.

Eine weitere Aufgabe der Erfindung ist die Bereitstellung eines Verfahrens zur Herstellung solcher Formkörper aus Kupfer-Chrom-Kontaktwerkstoffen, das in einfacher und wirtschaftlicher Weise durchgeführt werden kann.

Diese Aufgaben wurden erfindungsgemäß auf der Basis des überraschenden Befundes gelöst, daß Formkörper aus Kupfer-Chrom-Kontaktwerkstoffen mit einer hochwertigen Oberflächenstruktur mit Bereichen mit feinem Cr-Korngefüge ohne Poren, Fehlstellen oder Lunker erhalten werden können, wenn die Umwandlung des pulvermetallurgisch hergestellten Basiswerkstoffs durch Energieeintrag nicht großflächig, sondern in Form eines geometrischen Musters (linienförmig) vorgenommen wird. Ein wesentlicher Grund für die dabei stattfindende Entstehung fehlerfreier feinkörniger Bereiche ist vermutlich darin zu sehen, daß die in den Werkstoff eingebrachte Energie leicht und rasch in die Umgebung des umgeformten Bereichs abgeführt wird.

Gegenstand der Erfindung sind somit pulvermetallurgisch hergestellte, insbesondere flächige Formkörper aus einem Kupfer-Chrom-Vakuumkontaktwerkstoff mit 20 bis 60 Gew.-% Cr, Rest Cu und unvermeidliche Verunreinigungen, die dadurch gekennzeichnet sind, daß sie auf mindestens einer Hauptoberfläche ein geometrisches Muster aus Bereichen mit einer Gefügestruktur aufweisen, die feinkörniger als diejenige des pulvermetallurgischen Basiswerkstoffes ist.

Ein weiterer Gegenstand der Erfindung ist ein Verfahren zur Herstellung der genannten Formkörper, das dadurch gekennzeichnet ist, daß man eine energiereiche Strahlung in Form eines geometrischen Musters auf mindestens eine Hauptoberfläche eines pulvermetallurgisch hergestellten Formkörpers aus einem Kupfer-Chrom-Vakuumkontaktwerkstoff mit 20 bis 60 Gew.-% Cr, Rest Cu und unvermeidbare Verunreinigungen einwirken läßt.

Schließlich ist Gegenstand der Erfindung auch die Verwendung der genannten Formkörper als elektrische Vakuumschalter.

Bevorzugte Ausführungsformen der Erfindung sind in den Unteransprüchen beschrieben. Als energiereiche Strahlung kommen insbesondere Elektronenstrahlen, Lichtbogen und Laser in Betracht.

In der beiliegenden Zeichnung zeigen:
- Fig. 1: eine schematische Darstellung der Führung eines energiereichen Strahls (Elektronenstrahls) in einer bevorzugten Ausführungsform der Erfindung, bei der auf der Oberfläche einer Scheibe aus pulvermetallurgisch hergestelltem Kupfer-Chrom-Kontaktwerkstoff ein spiralförmiger Bereich mit feinkörniger Gefügestruktur hergestellt wird;
- Fig. 2: eine photographische Aufnahme (Vergrößerung 100:1) des pulvermetallurgisch hergestellten Werkstoffs, auf der die in einer Kupfermatrix verteilten Chrommetall-Teilchen zu sehen sind;
- Fig. 3: eine photographische Aufnahme (Vergrößerung 500:1) des Bereichs mit der feinkörnigen Gefügestruktur, in dem feine Cr-Dendriten in eine Cu-Matrix eingebettet sind;
- Fig. 4: eine photographische Aufnahme (Vergrößerung 13:1) der Querschnittfläche eines Formkörpers der Erfindung, auf der die keilförmig in den pulvermetallurgisch hergestellten Basiswerkstoff eindringenden Bereiche mit feinkörniger Gefügestruktur zu erkennen sind;
- Fig. 5: eine photographische Aufnahme (Vergrößerung 5:1) der Oberfläche eines Formkörpers der Erfindung mit spiralförmig ausgebildeten Bereichen mit feinkörniger Gefügestruktur.

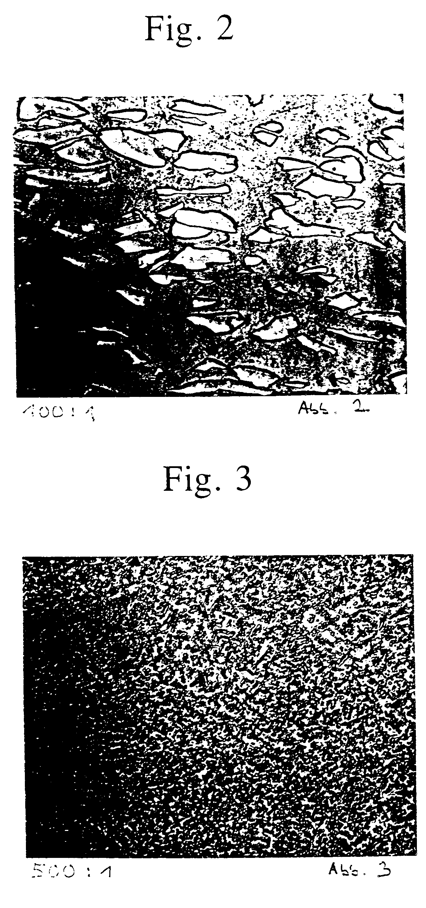

Nachstehend wird nun die Erfindung im Einzelnen erläutert. Als erster Schritt zur Herstellung der erfindungsgemäßen Formkörper werden Kupfer-Chrom-Formkörper auf pulvermetallurgischem Wege hergestellt. Gängige Formen sind flächige Körper, wie Scheiben, die mittig eine Vertiefung aufweisen können, oder Ringe, mit einem Durchmesser bis etwa 130 mm und einer Dicke bis etwa 20 mm. In einer dem Fachmann bekannten Art und Weise werden dazu zunächst die metallischen Rohstoffe Kupferpulver und Chrompulver in einem Verhältnis von 20 bis 60 Gew.-% Cr, vorzugsweise 25 bis 50 Gew.-% Cr, Rest Cu gemischt, dann zum gewünschten Formkörper gepreßt und in fester oder flüssiger Phase unter Vakuum gesintert. Der dicht gesinterte Werkstoff enthält gleichmäßig in einer Kupfermatrix verteilte Chrommetallpartikel mit einer Korngröße < 250 µm (vgl. Fig. 2). Der letzte Arbeitsschritt ist eine spangebende Bearbeitung.

Der so erhaltene Formkörper wird auf der Kontaktseite linienförmig oder in Form eines geometrischen Musters in der Weise umgeschmolzen, daS eine Gefügestruktur mit feinkörnigen neben gesinterten Bereichen des Basiswerkstoffes entsteht. Dies erfolgt durch Einwirkung energiereicher Strahlung, vorzugsweise mittels eines Elektronenstrahls, die eine hohe Energieflächendichte von 10⁶ bis 10⁸, vorzugsweise etwa 10⁷W/cm² aufweist. Die Strahlbreite kann 0,3 bis 5,0 mm betragen.

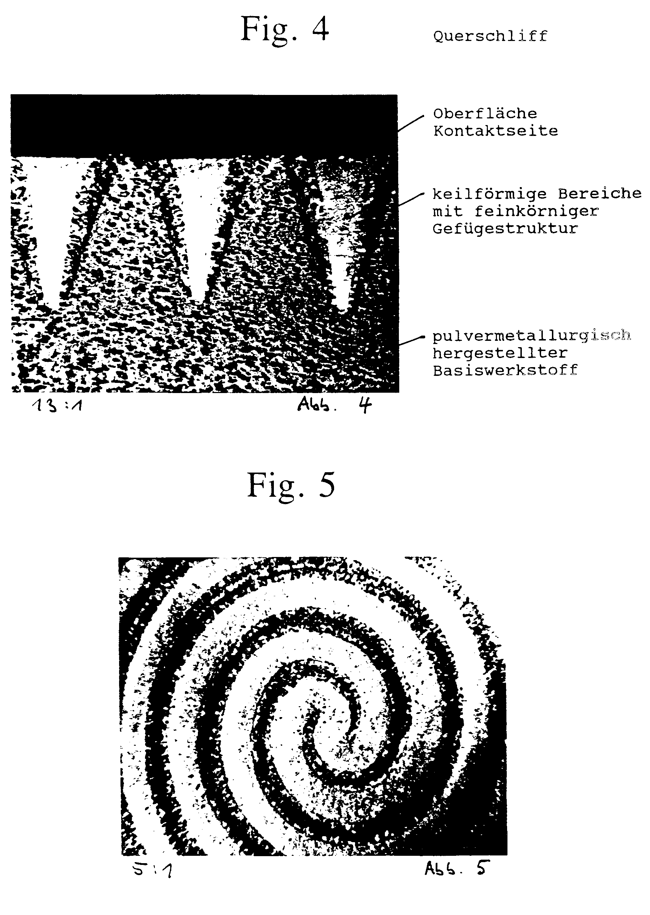

Die durch Einwirkung der energiereichen Strahlung erhaltene feinkörnige Gefügestruktur erstreckt sich keilförmig von der Oberfläche in das Innere des Basiswerkstoffes (vgl. Fig. 4) bis zu einer Tiefe von etwa maximal 90 %, vorzugsweise 60 % der Dicke des Formkörpers. Die feinkörnige Gefügestruktur weist an der Oberfläche eine Breite von mindesten 0,3 mm, vorzugsweise 1 bis 3 mm, die Bereiche mit der Struktur des Basiswerkstoffs eine Breite von höchstens 10 mm, vorzugsweise von 0,5 bis 3 mm auf. Das Flächenverhältnis der feinkörnigen Bereiche zu denjenigen des Basiswerkstoffs beträgt an der Oberfläche max. 1:10 (vorzugsweise 1:1). Bei einer möglichen Ausführungsform überschneiden sich die Bereiche mit feinkörniger Gefügestruktur an der Oberfläche, d.h. die behandelte Oberfläche ist vollständig feinkörnig, während darunter keilförmige feinkörnige Bereiche in dem pulvermetallurgischen Basiswerkstoff vorliegen.

Überraschenderweise hat sich gezeigt, daß das feinkörnige Gefüge im Gegensatz zu einer flächenförmigen Aufschmelzung im Schmelzkanal homogen, feinkörnig und Porenfrei erstarrt. Der Wärmeeintrag bleibt immer weitgehend punktuell, eine Überhitzung des Werkstoffs mit einer damit verbundenen Neigung zur Porenbildung wird vermieden. Die eingetragene Wärme wird rasch in die umgebenden, nicht vom direkten Wärmeeintrag betroffenen Bereiche abgeleitet. Die entstehende feinkörnige Gefügestruktur umfaßt Cr-Dendriten mit einem Durchmesser von 0,5 bis 100 µm in einer kontinuierlichen Cu-Matrix. Vorzugsweise entstehen äußerst feinkörnige Cr-Ausscheidungen von 1 bis 3 µm (vgl. Fig. 3). Die feinkörnige Cr-Ausscheidung führt zu einem unerwarteten Härte-Anstieg von ursprünglich ca. 90 Härte Vickers (HV) (Basiswerkstoff) auf 120 bis 170 HV (feinkörnige Struktur). Eine höhere Gesamthärte bedeutet einen technologischen Vorteil durch höhere Standfestigkeit gegen Verformung bei hohen Schaltspielen.

Ein besonderer Vorteil des Verfahrens der Erfindung liegt darin, daß der Elektronenstrahl frei programmierbar ist und die Oberfläche in beliebigen Mustern abrastern kann. Sämtliche oben genannten geometrischen Maßgaben wie Strahlbreite, Strahlform und Eindringtiefe werden durch die Parameter der Elektronenstrahlsteuerung wie Strahlstrom, Beschleunigungsspannung, Geschwindigkeit und Strahlfokus bestimmt.

Durch eine spiralförmige Führung des Elektronenstrahls kommen Ein- und Auslauf des Strahls ohne Absetzen auf dem äußeren Umfang der Scheibe bzw. beim Ring am äußeren und inneren Durchmesser zu liegen. Auf diese Weise können die zwangsläufig bei Ein- und Auslauf auftretenden Poren durch Überdrehen der Kanten auf einfache Weise entfernt werden.

Das folgende, nicht einschränkende Beispiel erläutert eine bevorzugte Ausführungsform der Erfindung.

### Beispiel

Eine aus Kupfer- und Chrom-Metallpulver mit der Zusammensetzung 75 Gew.-% Cu und 25 Gew.-% Cr hergestellte Scheibe mit 46 mm Durchmesser und 5 mm Stärke wird im Vakuum in fester Phase in bekannter Weise gesintert. Dieser Basiswerkstoff enthält gleichmäßig verteilte Cr-Körner < 160 µm in einer Cu-Matrix (vgl. Fig. 2).

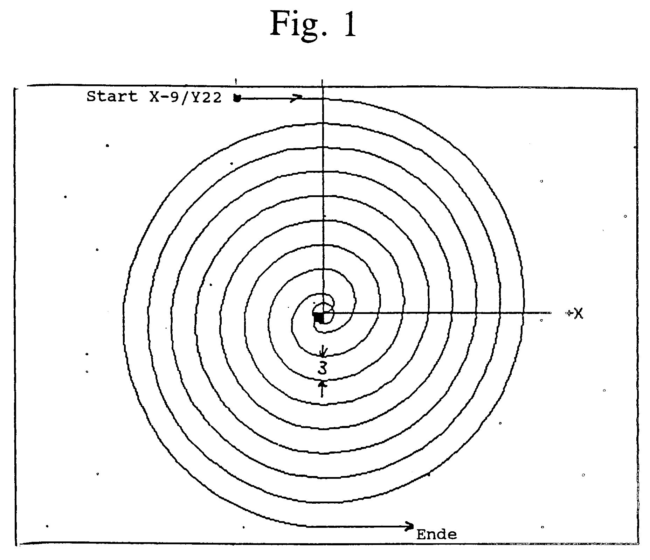

Die spätere Kontaktseite der Scheibe wird mit einen Elektronenstrahl in der Weise beaufschlagt, daß Ein- und Auslauf des Strahls am äußeren Umfang der Scheibe liegen (vgl. Fig. 1). Bei einer Energieflächendichte von 10⁷ W/cm² entstehen Bereiche mit feinkörniger Gefügestruktur, die sich keilförmig von der Oberfläche in das Innere der Scheibe erstrecken (vgl. Fig. 4). Die Eintringtiefe beträgt ca. 3 mm, der Nahtabstand ca. 3 mm, die Strahlbreite 1,5 mm.

Nach Entfernen der Schmelzraupe durch Überdrehen der Oberfläche wird die spiralförmige Struktur deutlich sichtbar (vgl. Fig. 5). Die keilformigen Bereiche, eingebettet im Basiswerkstoff, erstarren feinkörnig und porenfrei an der Oberfläche und im Werkstoff mit Cr-Dendriten mit ca. 2 µm Durchmesser (vgl. Fig. 3).

Der feinkörnige Bereich erfährt eine Härtesteigerung von 90 HV (Basiswerkstoff) auf 150 HV. Die elektrische Leitfähigkeit liegt bei 31 mΩ/mm².

## Patentansprüche

1. Pulvermetallurgisch hergestellter Formkörper aus einem Kupfer-Chrom-Vakuumkontaktwerkstoff mit 20 - 60 Gew.-% Cr, Rest Cu und unvermeidliche Verunreinigungen, dadurch gekennzeichnet, daß er auf mindestens einer Hauptoberfläche ein geometrisches Muster aus Bereichen mit einer Gefügestruktur aufweist, die feinkörniger als diejenige des pulvermetallurgischen Basiswerkstoffes ist.

2. Formkörper nach Anspruch 1, dadurch gekennzeichnet, daß er die Form einer Scheibe oder eines flachen Rings hat.

3. Formkörper nach einem der Ansprüche 1 oder 2, dadurch gekennzeichnet, daß der Basiswerkstoff durch Sintern von Chrommetallpulver mit einer Korngröße < 250 µm in einer Kupfermatrix in fester oder flüssiger Phase erhalten wurde.

4. Formkörper nach einem der Ansprüche 1 bis 3, dadurch gekennzeichnet, daß sich die Bereiche mit feinkörniger Gefügestruktur keilförmig von der Oberfläche in das Innere des Formkörpers erstrecken.

5. Formkörper nach Anspruch 4, dadurch gekennzeichnet, daß sich die Bereiche mit feinkörniger Gefügestruktur bis zu einer Tiefe von etwa 90 % der Dicke des Formkörpers erstrecken.

6. Formkörper nach einem der Ansprüche 1 bis 5, dadurch gekennzeichnet, daß die Bereiche mit feinkörniger Gefügestruktur eine Breite von mindestens 0,3 mm und die Bereiche mit der Struktur des Basiswerkstoffs eine Breite von höchstens 10 mm aufweisen, wobei das Flächenverhältnis der feinkörnigen Bereiche zu den Bereichen des Basiswerkstoffes an der Oberfläche bis höchstens 1:10 reicht.

7. Formkörper nach Anspruch 6, dadurch gekennzeichnet, daß sich die Bereiche mit feinkörniger Gefügestruktur überschneiden.

8. Formkörper nach einem der Ansprüche 1 bis 7, dadurch gekennzeichnet, daß die feinkörnige Gefügestruktur frei von Poren und Lunkern ist und Cr-Dentriten mit einem Durchmesser von 0,5 bis 100 µm umfaßt.

9. Formkörper nach einem der Ansprüche 1 bis 8, dadurch gekennzeichnet, daß die Bereiche mit feinkörniger Gefügestruktur eine Vickers-Härte von 120 bis 180 aufweisen.

10. Formkörper nach einem der Ansprüche 1 bis 9, dadurch gekennzeichnet, daß die Bereiche mit feinkörniger Gefügestruktur spiralförmig angeordnet sind.

11. Verfahren zur Herstellung eines Formkörpers nach einem der Ansprüche 1 bis 10, dadurch gekennzeichnet, daß man energiereiche Strahlung in Form eines geometrischen Musters auf mindestens eine Hauptoberfläche eines pulvermetallurgisch hergestellten Formkörpers aus einem Kupfer-Chrom-Vakuumkontaktwerkstoff mit 20-60 Gew.-% Cr, Rest Cu und unvermeidbare Verunreinigungen einwirken läßt.

12. Verfahren nach Anspruch 11, dadurch gekennzeichnet, daß die energiereiche Strahlung ein Elektronenstrahl, Lichtbogen oder Laserstrahl ist.

13. Verfahren nach Anspruch 11 oder 12, dadurch gekennzeichnet, daß die energiereiche Strahlung eine Energieflächendichte von 10⁶ - 10⁸ W/cm² und eine Strahlbreite von 0,3 bis 5,0 mm aufweist.

14. Verfahren nach einem der Ansprüche 11 bis 13, dadurch gekennzeichnet, daß zur Herstellung eines Formkörpers nach Anspruch 10 der energiereiche Strahl spiralförmig in der Weise geführt wird, daß Ein- und Auslauf des Strahls am äußeren Umfang der Scheibe bzw. am äußeren und inneren Durchmesser des Rings liegen.

15. Verwendung eines Formkörpers nach einem der Ansprüche 1 bis 10 als Schaltkontakt elektrischer Vakuumschalter.
